# DEMANDE DE BREVET EUROPEEN

(11) **EP 2 886 974 A1**
(43) Date de publication de la demande: **24.06.2015**
(21) Numéro de dépôt: 13306850.2
(22) Date de dépôt: 23.12.2013
(51) Int. Cl.: F24J 2/54

(54) **Système amélioré de suivi du soleil pour des objets**

(71) Demandeur: Qingsun Developpement SAS, 73372 Le Bourget du Lac Cedex (FR)
(72) Inventeur: Qinglong, Lin, 73000 Chambery (FR)
(74) Mandataire: Nony

(57) **Abrégé**

L'invention concerne un systéme de suivi du soleil pour des objets en rangées, dans lequel il est prévu un seul mécanisme d'entraînement en rotation à poulies et lien souple, qui est commun à toutes les rangées d'objets, l'inclinaison individuelle d'une rangée par rapport à l'autre ou une même inclinaison pour l'ensemble des rangées étant réglée initialement par la fixation du lien souple sur chaque poulie de châssis support d'une rangée afin que chaque rangée suive individuellement le déplacement du soleil tout au long de course(s) de rotation prédéterminée(s).

## Description

### Domaine technique

La présente invention concerne un système amélioré de suivi du soleil pour des objets.

La présente invention vise plus particulièrement à proposer le mécanisme d'entraînement de ce type de système qui soit simple à réaliser, fiable et peu coûteux.

Bien que décrite en relation avec les applications préférées de système solaire à concentration linéaire et système solaire à panneaux photovoltaïques, l'invention peut concerner toute application pour laquelle un suivi du soleil au mieux au cours d'une journée et/ou au cours d'une saison.

L'invention peut ainsi être appliquée à tout système dans lequel le rayonnement solaire pour des objets donnés doit être maximal au cours d'une journée et/ou au cours d'une saison. A titre d'exemple d'application envisageable, on peut citer le séchage d'objets ou encore la culture de plantes ou d'algues ou de micro-algues afin d'augmenter leur croissance par photosynthèse, les supports du système selon l'invention étant alors respectivement les supports d'objets ou les supports de plantes, algues, micro-algues.

### Etat de la technique

Dans le domaine de l'énergie solaire , il est connu les systèmes à concentration linéaire du type comprenant un récepteur solaire linéaire agencé au-dessus d'une pluralité de rangées de miroirs, chaque rangée de miroirs étant fixée sur un châssis monté en rotation autour d'un axe, les axes des rangées de miroirs étant parallèles entre eux et selon une direction parallèle au récepteur solaire linéaire.

Dans un tel système, les rangées de miroirs doivent chacune être orientées individuellement selon un angle différent, pour tenir compte individuellement de la variation de la direction des rayons solaires au cours de la journée et au cours des saisons, et refléter ainsi chacune les rayons incidents selon une zone linéaire dans laquelle est agencée le récepteur solaire. Le récepteur solaire capte ainsi l'énergie solaire pour la transformer en énergie thermique.

Un système à concentration solaire linéaire est par exemple décrit dans la demande de brevet US 2011/0005513 et le brevet US 7950386.

Les systèmes connus présentent tous l'inconvénient majeur de prévoir un mécanisme d'entraînement par rangée de miroirs, ce qui implique un coût d'investissement non négligeable. En outre, cela implique un calage et un suivi de rotation en temps réel, différent rangée par rangée de miroirs qui peut être compliqué à mettre en oeuvre sans être nécessairement fiable.

En outre, parmi les systèmes connus, il a déjà été prévu des mécanismes d'entraînement individuels par vérins hydrauliques. Ainsi, un ou plusieurs vérins hydrauliques entraînent la rotation d'une rangée de miroirs. Ces mécanismes ajoutent des inconvénients supplémentaires. En effet, tout d'abord l'énergie à fournir pour l'actionnement des vérins est conséquente. Ensuite, les contraintes mécaniques induites sur les vérins peuvent être importantes. Par conséquent, ces systèmes à mécanismes d'entraînement individuels par vérins hydrauliques impliquent un coût de fonctionnement non négligeable et un risque de défaillance.

Dans le domaine des systèmes solaires photovoltaïques, il existe aussi des mécanismes d'entraînement qui entraînent des panneaux photovoltaïques soit individuellement les uns par rapport aux autres soit ou les entraîne en même temps par groupe de panneaux.

De tels mécanismes d'entraînement pour systèmes solaires photovoltaïques sont par exemple décrits dans les demandes de brevet US2008/308091 et EP2053451. Cependant, ces mécanismes entraînement pour systèmes photovoltaïques ont toujours des faiblesses sur la simplicité et la fiabilité de suivi du soleil, le coût de maintenance,

Par ailleurs, dans ces domaines qui viennent d'être décrits, les miroirs ou les panneaux photovoltaïques sont supportés individuellement ou par groupe par des supports ou châssis qui peuvent eux-mêmes être entraînés par les mécanismes d'entraînement connus comme présentés ci-avant.

De tels supports ou châssis sont par exemple décrits dans les demandes de brevet CA2832379, WO20100024891, WO20100039235. Les inconvénients des châssis connus sont nombreux. En premier lieu, la structure de tous les supports connus est complexe. En outre, le centre de gravité n'est pas proche de l'axe de rotation lorsque le châssis pivote. Enfin, la liaison entre deux segments de structure n'est prévue qu'en passant par l'axe de rotation, ce qui rend la structure peu solide.

Il existe donc un besoin d'améliorer le(s) mécanisme(s) d'entraînement en rotation des rangées de miroirs d'un système à concentration solaire linéaire décrit en préambule, et celui(ceux) des panneaux photovoltaïques notamment en vue de diminuer son coût d'investissement et de fonctionnement et d'augmenter sa fiabilité.

De manière plus générale, il existe un besoin d'améliorer les mécanismes de suivi de soleil pour des objets, notamment en vue de diminuer son coût d'investissement et de fonctionnement et d'augmenter sa fiabilité.

Il existe également un besoin d'améliorer les structures, supports ou châssis des miroirs ou panneaux photovoltaïques, notamment en vue de les simplifier et de les rendre plus solides.

Le but de l'invention est de répondre au moins partiellement à ce(s) besoin(s).

### Exposé de l'invention

Pour ce faire, l'invention a tout d'abord pour objet, selon un premier de ses aspects, un système de suivi du déplacement du soleil pour des objets comprenant :
- une pluralité de rangées d'objets une pluralité de châssis comprenant chacun un axe de rotation, chaque châssis comportant au moins une partie conformée en poulie, dite poulie de châssis, chaque rangée d'objets étant fixée sur un châssis,
- au moins une pluralité de poulies, dits galets enrouleurs,
- au moins un lien souple d'entraînement passant par la pluralité des poulies de châssis et des galets enrouleurs; chaque lien souple étant enroulé autour des poulies de châssis au moyen des galets enrouleurs,
- au moins une force d'entraînement adaptée pour être exercée sur le lien souple pour mettre en rotation les poulies de châssis dans leurs deux sens de rotation autour de leur axe selon une course de rotation prédéterminée dans chaque sens de rotation,

le lien souple étant fixé sur chaque poulie de châssis de telle sorte que chaque rangée d'objets soit inclinée avec un angle prédéterminé afin de suivre individuellement le déplacement du soleil tout au long de chaque course de rotation prédéterminée.

Les objets entraînés peuvent être notamment des miroirs ou des panneaux photovoltaïques.

Lorsque les objets sont des panneaux solaires photovoltaïques, les rangées de panneaux photovoltaïques sont inclinées avec un même angle par rapport à l'horizontal et ensuite, elles sont entraînées simultanément et la même manière pour suivre le déplacement du soleil afin que l'angle d'incidence du rayonnement solaire sur les panneaux photovoltaïques soit le plus petit possible tout au long de chaque course de rotation prédéterminée.

Lorsque les objets sont des miroirs, il s'agit d'un système solaire à concentration linéaire pour concentrer le rayonnement solaire selon une bande linéaire. Il comprend en plus dans le système de suivi décrit précédemment, un récepteur solaire qui est fixé au-dessus des rangées de miroirs, chaque rangée de miroir étant inclinée avec un angle prédéterminé différent d'une rangée à l'autre afin de refléter individuellement le rayonnement solaire sur le récepteur solaire tout au long de chaque course de rotation prédéterminée.

Le récepteur solaire selon l'invention peut être un capteur thermique, c'est-à-dire un dispositif conçu pour recueillir l'énergie solaire réfléchie par les miroirs et la transférer à un fluide (gaz ou liquide) sous forme de chaleur afin de contribuer à la production d'eau chaude ou de vapeur d'eau. Un tel récepteur/capteur thermique peut être constitué d'un ou plusieurs caloducs ou d'un échangeur thermique avec un tube à travers lequel un fluide caloporteur circule et qui reçoit le rayonnement solaire réfléchi par les miroirs.

Le récepteur solaire selon l'invention peut être également un récepteur photovoltaïque, c'est-à-dire un dispositif conçu pour transformer l'énergie solaire réfléchie (les photons) par les miroirs en électricité.

Le récepteur solaire selon l'invention peut être également une partie d'un réacteur-échangeur thermique, c'est-à-dire un dispositif conçu pour mettre en oeuvre une réaction chimique au moyen de l'énergie solaire réfléchie par les miroirs.

Le récepteur solaire selon l'invention peut être également un récepteur hybride, c'est-à-dire un récepteur à la fois capteur thermique et récepteur photovoltaïque.

Les poulies de châssis sont avantageusement des poulies à gorge ou à flasques qui permettent de guider latéralement le lien souple sur ces poulies, c'est-à-dire pour éviter que le lien souple ne se désengage de la périphérie des poulies.

Les poulies d'enroulement ou galets enrouleurs permettent d'augmenter la puissance transmissible par le lien souple à chaque poulie de châssis en augmentant l'angle d'enroulement autour de cette dernière et en sollicitant le moins possible la fixation mécanique du lien souple sur la poulie de châssis. Chaque angle d'enroulement du lien souple autour d'une poulie de châssis qui est obtenu par les galets enrouleurs permet d'obtenir l'angle d'inclinaison souhaité tout au long de la course de rotation.

Autrement dit, l'invention consiste à prévoir un seul mécanisme d'entraînement en rotation à poulies et lien souple, qui est commun à toutes les rangées d'objets, l'inclinaison individuelle d'une rangée par rapport à l'autre ou une même inclinaison pour l'ensemble des rangées étant réglée initialement par la fixation du lien souple sur chaque poulie de châssis support d'une rangée.

Lorsque les objets sont des panneaux solaires photovoltaïques, la fixation du lien souple sur chaque poulie permet d'avoir un mouvement identique pour l'ensemble des rangées de panneaux photovoltaïques.

Lorsque les objets sont des miroirs, la fixation du lien souple sur chaque poulie permet de reproduire un profil pseudo cylindro-parabolique pour l'ensemble des rangées de miroirs. Autrement dit, chaque rangée est inclinée selon une inclinaison différente des autres rangées et toutes les rangées sont inclinées en définissant ensemble une courbe cylindro-parabolique.

La fixation du lien souple sur chaque poulie permet d'éviter les risques de glissement du lien souple d'entraînement du fait de sa fixation à chaque poulie de châssis. Ainsi, il ne peut y avoir de dérive en quelque sorte de l'inclinaison des rangées d'objets.

Selon l'invention, une seule force d'entraînement suffit pour l'orientation selon une incidence propre à chaque rangée d'objets. Un seul calage et un seul suivi sont nécessaires pour toutes les rangées d'objets avec donc une seule commande.

Par conséquent, le coût de réalisation et de fonctionnement d'un système de suivi solaire est moindre comparativement à ceux de l'art antérieur du fait du mécanisme d'entraînement commun à toutes les rangées d'objets.

Grâce à l'invention, on obtient un mécanisme d'entraînement commun peu coûteux et on évite à coup sûr une mauvaise orientation des rangées d'objets.

On peut ainsi maîtriser aisément l'orientation de chaque rangée d'objets avec une précision élevée et ce même dans des applications où les contraintes de température et/ou d'hygrométrie sont élevées.

Le mécanisme selon l'invention est par conséquent fiable et peu coûteux. Selon un premier mode avantageux, le système comprend :
- au moins un lien souple continu,
- au moins une première poulie, dite première poulie d'entraînement, agencée à l'extérieur d'un côté des châssis,
- au moins une deuxième poulie, dite poulie de renvoi, agencée à l'extérieur du côté des châssis opposé à celui où est agencée la poulie d'entraînement, le lien souple continu étant enroulé autour de la poulie d'entraînement et de la poulie de renvoi,
- un moteur constituant la force d'entraînement, adapté pour mettre en rotation la poulie d'entraînement dans ses deux sens de rotation selon les courses de rotation prédéterminée.

Selon ce premier mode, le système comprend de préférence:
- deux poulies d'entraînement reliées entre elles par un axe de transmission,
- deux poulies de renvoi reliées entre elles par un axe de transmission,
- deux liens souples d'entraînement continus,
chaque châssis comprenant une poulie de châssis à chacune de ses extrémités,
chaque lien souple continu reliant une poulie d'entraînement à une poulie de renvoi et étant fixé aux poulies de châssis d'une extrémité.

Selon un deuxième mode de réalisation avantageux, le système comprend :
- au moins un lien souple discontinu,
- au moins une première poulie, dite première poulie d'entraînement, agencée à l'extérieur d'un côté des châssis,
- au moins une deuxième poulie, dite deuxième poulie de d'entraînement, agencée à l'extérieur du côté des châssis opposé à celui où est agencée la poulie d'entraînement, le lien souple discontinu étant fixé à la première et deuxième poulies d'entraînement,
- un premier moteur adapté pour mettre en rotation la première poulie d'entraînement dans un sens de rotation selon une première course de rotation prédéterminée,
- un deuxième moteur adapté pour mettre en rotation la deuxième poulie d'entraînement dans un sens de rotation selon une deuxième course de rotation prédéterminée, le sens de rotation de la première poulie d'entraînement étant opposé à celui de la deuxième poulie d'entraînement.

Selon ce deuxième mode, le système comprend de préférence :
- deux premières poulies d'entraînement reliées entre elles par un axe de transmission,
- deux deuxièmes poulies d'entraînement reliées entre elles par un axe de transmission,
- deux liens souples d'entraînement discontinus,
chaque châssis comprenant une poulie de châssis à chacune de ses extrémités,
chaque lien souple discontinu reliant une première poulie d'entraînement à une deuxième poulie d'entraînement et étant fixé aux poulies de châssis d'une extrémité.

Avantageusement, au moins une poulie de châssis est réalisée à l'une des extrémités de chaque châssis.

Selon une variante avantageuse, deux galets enrouleurs sont agencés individuellement de part et d'autre d'une poulie de châssis.

Le fonctionnement d'un moteur d'entraînement peut être asservi avantageusement par un algorithme de calcul de la position du soleil et de l'angle d'inclinaison des rangées des objets.

De manière alternative, le fonctionnement d'un moteur d'entraînement peut être asservi à des capteurs de position adaptés pour calculer la position du soleil et l'angle d'inclinaison des rangées des objets.

Selon une variante avantageuse, le châssis est assemblé par modules.

Le lien souple peut être une chaîne ou un câble.

La force d'entraînement peut être alimentée par des panneaux solaires photovoltaïques.

Selon une variante avantageuse, la fixation du lien souple à chaque poulie de châssis se situant à l'endroit où l'angle maximal de rotation dans le sens horaire est égal à celui dans le sens anti-horaire.

L'invention concerne, sous un autre de ses aspects, un châssis, destiné à être mis en oeuvre dans le système décrit précédemment, comprenant:
- un axe de rotation,
- deux poulies de châssis agencées individuellement autour de l'axe,
- au moins une cloison de renfort conformée en segment circulaire agencé entre les deux poulies de châssis,
- trois tubes de rigidification s'étendant selon l'axe et agencés angulairement à 120° l'un de l'autre, les tubes supportant la(les) cloison(s) de support et les poulies de châssis, les tubes étant en outre adaptés pour supporter individuellement un ou plusieurs objets.

La forme triangulaire définie par les trois tubes de rigidification et la portion plate du segment circulaire permettent d'avoir un centre de gravité de l'ensemble châssis et rangée d'objets qu'il supporte, le plus proche de l'axe de rotation du châssis. Ainsi, on évite au mieux les phénomènes de balourd susceptibles d'être créés par les miroirs.

Avec une telle structure, un châssis selon l'invention est solide mécaniquement et simple à assembler par modules.

Pour l'assemblage proprement dit, on peut en quelque sorte enfiler les poulies de châssis et les cloisons à segment circulaire sur les tubes de rigidification, et fixer ensemble ou les souder ensemble par soudure. La section des tubes de rigidification peut être rectangle, carré, triangle ou autre forme.

Un tel assemblage modulaire peut être aisément réalisé in situ, c'est-à-dire sur le lieu d'implantation du système solaire selon l'invention.

En outre, avec une structure de châssis, on peut agencer des miroirs complètement plans qui sont supportés par la ou les cloisons et qui ne nécessitent pas de moyens de fixation apparents à leur surface. Le nettoyage des miroirs est facilité d'autant.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 est une vue schématique de face, d'un exemple de réalisation d'un système à concentration solaire linéaire selon l'invention,
- la figure 1A est une vue schématique en perspective de dessus du système à concentration solaire linéaire selon l'invention;
- la figure 2 est une vue schématique de face montrant une variante de réalisation du mécanisme d'entraînement d'un système à concentration solaire linéaire selon l'invention;
- la figure 3 est une vue en perspective d'un exemple de réalisation d'un châssis support de rangée de miroirs conforme à l'invention ;
- la figure 3A est une vue de détail de face montrant la fixation du lien souple d'entraînement à une poulie de châssis support de rangée de miroirs conformément à l'invention ;
- la figure 3B est une vue de détail de cloison de renfort d'un châssis support de rangée de miroirs conforme à l'invention,
- la figure 4 est une vue schématique en perspective de face d'un exemple de réalisation d'un système à panneaux solaires photovoltaïques selon l'invention.

On précise qu'ici et dans l'ensemble de la présente demande, les termes «inférieur», « supérieur», « dessus » et « dessous » sont à comprendre par référence à un système selon l'invention en vue de face avec le récepteur solaire au-dessus des miroirs et leur mécanisme d'entraînement au sol.

Egalement, dans la description qui va suivre, on utilise un système de référence X, Y, Z dans lesquels le terme «longitudinal» sont à considérer en référence à la direction Z d'alignement des châssis support des rangées de miroirs et du récepteur solaire conformes à l'invention. Les termes «intérieur», «extérieur», et «latéral» sont à considérer en référence à la direction X générale d'entraînement du lien souple 7.

Ainsi, tous les axes de rotation 4 des châssis 3 de miroirs sont parallèles à la direction Z, le récepteur solaire 5 est au-dessus des châssis de miroirs selon la direction Y, et deux châssis 3 adjacents sont agencés latéralement l'un à côté de l'autre selon la direction X.

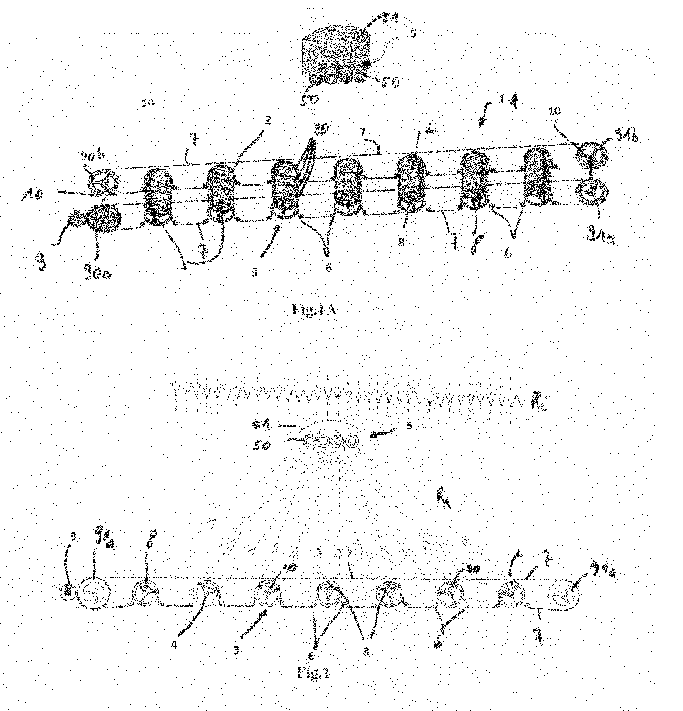

Un système solaire à concentration linéaire 1 selon l'invention pour concentrer le rayonnement solaire selon une bande linéaire est montré en figure 1.

Le système comporte tout d'abord un récepteur solaire 5. Il peut s'agir d'un capteur solaire thermique, d'un récepteur photovoltaïque, d'un réacteur-échangeur thermique ou d'un récepteur hybride, i.e. thermique et photovoltaïque.

Le récepteur solaire 5 peut comprendre un ou plusieurs tubes 50 d'absorption de l'énergie solaire parallèles entre eux et au-dessus desquels est agencé un toit de protection 51 qui est en même temps réfléchissant à l'intérieur pour concentrer de nouveau le rayonnement déjà concentré par l'ensemble des rangées de miroirs.

Une pluralité de rangées 2 de miroirs 20 est fixée individuellement sur un châssis 3 monté en rotation autour d'un axe de rotation 4 parallèle à la direction Z. Chaque miroir 20 peut être plan ou courbé. L'utilisation de miroirs légèrement courbés est avantageuse car cela permet de concentrer au mieux individuellement le rayonnement sur le récepteur solaire 5.

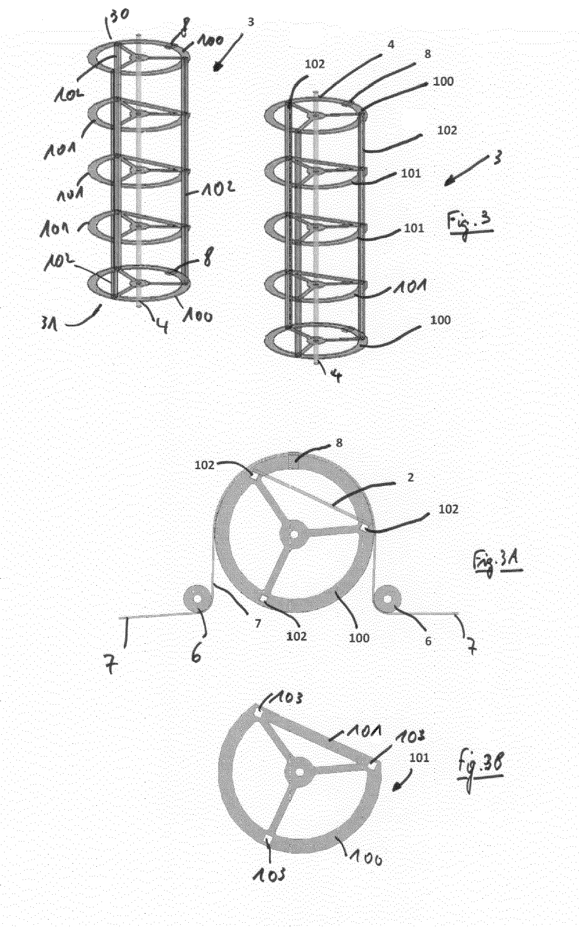

Chaque châssis 3 comporte au moins une partie conformée en poulie, dite poulie de châssis 100. Tel qu'illustré en figure 1A et en figure 3, un châssis 3 comporte de préférence une poulie de châssis à chacune de ses extrémités 30, 31. Chaque châssis 3 est assemblé de préférence par modules comme décrit plus précisément ci-après.

De part et d'autre de chaque châssis 3, est agencé latéralement au moins un galet enrouleur 6 qui permet d'enrouler un lien souple d'entraînement 7 autour de chaque poulie de châssis 100.

Le système 1 selon l'invention comprend enfin au moins un moteur d'entraînement 9 adapté pour exercer un effort de traction sur le lien souple selon la direction X dans un sens ou dans l'autre, pour mettre en rotation les poulies de châssis 100 dans leurs deux sens de rotation autour de leur axe selon une course de rotation prédéterminée.

Selon l'invention, le lien souple 7 fixé sur chaque poulie de châssis 100 de telle sorte que chaque rangée 2 de miroirs 20 soit inclinée avec un angle prédéterminé différent d'une rangée à l'autre afin de refléter individuellement le rayonnement solaire sur le récepteur solaire 5 tout au long de la course de rotation prédéterminée.

Avec le montage sur les châssis 3 et la fixation par lien souple 7, les rangées 2 de miroirs 20 définissent de manière discontinue un profil général pseudo cylindro-parabolique.

Selon l'invention, il est prévu un seul mécanisme d'entraînement en rotation des miroirs 20, qui est commun à toutes les rangées 20, et qui est réalisé à partir d'un lien souple 7 et de poulies 100, 6 et d'au moins un moteur d'entraînement commun 9. Quelle que soit la saison et quelle que soit l'heure de la journée, ce mécanisme d'entraînement unique, commun à toutes les rangées 2 de miroirs 20 permet au miroir fictif de profil pseudo cylindro-parabolique de recueillir les rayons solaires incidents Ri et de les réfléchir sur le récepteur solaire 5.

A titre d'exemple non limitatif, le système 1 selon l'invention peut comprendre un nombre égal à sept rangées de miroirs, chaque rangée ayant 100 mètres de longueur de miroirs.

Le système solaire 1 selon l'invention présente de nombreux avantages comparativement à ceux selon l'état de l'art, parmi lesquels on peut citer :
- une plus grande précision dans le suivi du rayonnement solaire pour toutes les rangées de miroirs car, un seul réglage est requis pour toutes les rangées et elles sont toutes déplacées simultanément selon le même rythme avec le mécanisme d'entraînement unique,
- une fiabilité accrue car il n'y a pas de risques de cumul d'erreurs de positionnement pour chaque rangée de miroirs comme dans les systèmes selon l'état de l'art où les erreurs potentielles de conception/réalisation de chaque moteur d'entraînement s'ajoutent à celles des vérins de déplacement des rangées de miroirs,
- un coût d'investissement et de fonctionnement moindres du fait qu'un seul moteur d'entraînement est nécessaire et une seule commande est à gérer pour l'ensemble des rangées de miroirs.

On a représenté en figures 1 et 1A, un premier mode de réalisation d'un système 1 dans lequel un lien souple continu 7 et un seul moteur d'entraînement 9 en rotation selon les deux sens de rotation sont prévus. Dans ce premier mode, le système 1 comprend au moins une poulie d'entraînement 90a, 90b, agencée à l'extérieur d'un côté latéral des châssis 3 et au moins une poulie de renvoi 91a, 91b, agencée à l'extérieur du côté latéral des châssis opposé à celui où est agencée la(les) poulie(s) d'entraînement 90a, 90b. Comme on peut le voir sur la figure 1, dans ce premier mode, on veille à ce que la partie du dessus du lien souple 7 entre la poulie de renvoi 91a et la poulie d'entraînement 90a soit agencée à distance des poulies de châssis 100 pour éviter tout contact.

Une variante de réalisation préférée pour réduire la puissance du moteur d'entraînement 9 requise est représentée en figure 1A.

Selon cette variante, il est prévu deux poulies d'entraînement 90a, 90b reliées entre elles par un axe de transmission 10, deux poulies de renvoi 91a, 91b reliées entre elles par un axe de transmission 10, deux liens souples d'entraînement continus 7 et une poulie de châssis 100 à chacune des extrémités longitudinales 30, 31. Selon cette variante, chaque lien souple continu 7 relie une poulie d'entraînement 90a, 90b à une poulie de renvoi 91a, 91b et est fixé aux poulies de châssis 100 d'une extrémité 30, 31.

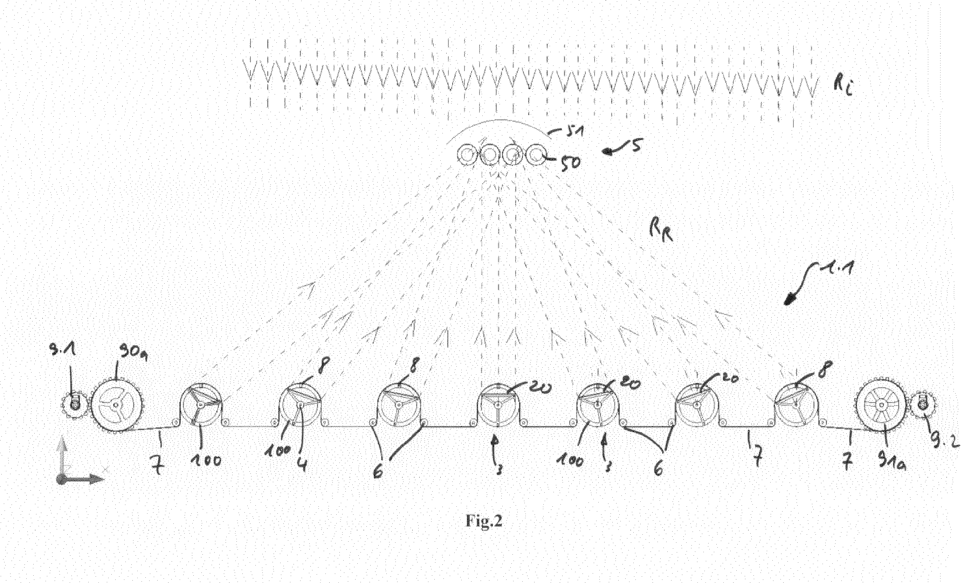

On a représenté en figure 2, un deuxième mode de réalisation d'un système 1 dans lequel un lien souple discontinu 7 et deux moteurs d'entraînement 9.1, 9.2 en rotation chacun selon un sens de rotation sont prévus. Dans ce deuxième mode, au moins une première poulie d'entraînement 90a est agencée à l'extérieur d'un côté latéral des châssis 3 et est entraînée par un des moteurs 9.1 selon un sens de rotation, et au moins une deuxième poulie d'entraînement 91a est agencée à l'extérieur du côté latéral des châssis opposé à celui où est agencée la première poulie d'entraînement 90a, et est entraînée par l'autre moteur 9.2 selon l'autre sens de rotation.

On a représenté en figures 3 à 3B, un mode de réalisation préféré pour un châssis-support 3 d'une rangée de miroirs 20.

Le châssis-support 3 comprend deux poulies de châssis 100 agencées individuellement autour de l'axe de rotation 4 et chacune à l'une des extrémités 30, 31 du châssis.

Entre les deux poulies de châssis 100, sont agencées des cloisons conformées en segment circulaire 101. Les cloisons 101 permettent à la fois de séparer les miroirs ou les objets 20 et de de renforcer le châssis-support 3.

Les poulies de châssis 100 et les cloisons séparation et de renfort 101 sont supportées et assemblées à un ensemble de trois tubes 102 s'étendant selon l'axe 4 et qui sont agencés angulairement à 120° l'un de l'autre, les tubes 102 supportant les cloisons 101 et les poulies de châssis. Les tubes 102 permettent de rigidifier la structure du châssis et ils servent de supports aux miroirs, panneaux photovoltaïques ou autres objets 20. Ces tubes 102 peuvent avoir avantageusement une section carrée.

Un tel châssis est solide mécaniquement et simple à assembler. En outre, de par l'agencement à 120° l'un de l'autre des tubes 102, le centre de gravité d'un ensemble constitué par un châssis 3 et une rangée 2 de miroirs 20 supportée peut être le plus proche possible de l'axe de rotation 4.

L'assemblage d'un châssis 3 selon l'invention peut être réalisé in situ, c'est-à-dire dans la zone géographique d'implantation du système solaire 1 selon l'invention.

L'assemblage des différents éléments du châssis 3 est aisé car il suffit de procéder comme suit :
- enfiler, c'est-à-dire loger individuellement les tubes de rigidification 102 dans les ouvertures 103 prévues à cet effet dans chaque cloison support 101 et chaque poulie de châssis 100, selon une position axiale prédéfinie,
- fixer ou souder chaque cloison 101 et poulie 100 aux tubes 102 dans la position axiale prédéfinie.

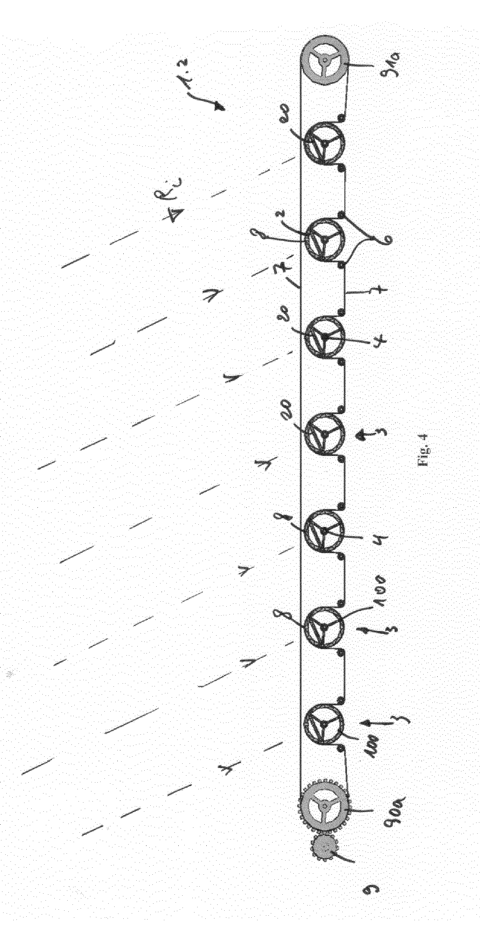

On a représenté en figure 4 un autre mode de réalisation de l'invention : il s'agit d'un système de suivi photovoltaïques, les châssis supportant chacun des panneaux solaires photovoltaïques. Comme on peut le voir, selon ce mode, toutes les rangées 2 de panneau photovoltaïque sont inclinées avec un même angle par rapport à l'horizontal.

Leur entraînement par un mécanisme d'entraînement avec lien souple 7 comme décrit ci-avant permet à tous les panneaux photovoltaïques de suivre le déplacement du soleil afin que l'angle d'incidence du rayonnement solaire sur les panneaux photovoltaïques soit le plus petit possible tout au long des courses de rotation prédéterminées du châssis 3.

Autrement dit, comme représenté en figure 4, la projection du rayonnement solaire dans la section perpendiculaire Ri peut être perpendiculaire à toutes les rangées de miroirs 20 tout au long d'une journée.

D'autres variantes et améliorations peuvent être prévues sans pour autant sortir du cadre de l'invention.

Ainsi, par exemple, tous types d'objets autres que miroirs ou panneaux photovoltaïques peuvent être supportés en rangées par les châssis selon l'invention, en étant inclinés avec un angle prédéterminé afin de suivre individuellement le déplacement du soleil tout au long de chaque course de rotation prédéterminée.

L'invention n'est pas limitée aux exemples qui viennent d'être décrits ; on peut notamment combiner entre elles des caractéristiques des exemples illustrés au sein de variantes non illustrées.

## Revendications

**1.** Système de suivi du déplacement du soleil (1) pour des objets, comprenant :
- une pluralité de rangées (2) d'objets (20),
- une pluralité de châssis (3) comprenant chacun un axe de rotation (4), chaque châssis comportant au moins une partie conformée en poulie, dite poulie de châssis (100), chaque rangée d'objets étant fixée sur un châssis,
- au moins une pluralité de poulies (6), dits galets enrouleurs,
- au moins un lien souple (7) d'entraînement passant par la pluralité des poulies de châssis et des galets enrouleurs; chaque lien souple étant enroulé autour des poulies de châssis au moyen des galets enrouleurs,
- au moins une force d'entraînement (9) adaptée pour être exercée sur le lien souple pour mettre en rotation les poulies de châssis dans leurs deux sens de rotation autour de leur axe (4) selon une course de rotation prédéterminée dans chaque sens de rotation,
le lien souple étant fixé sur chaque poulie de châssis de telle sorte que chaque rangée d'objet(s) soit inclinée avec un angle prédéterminé afin de suivre individuellement le déplacement du soleil tout au long de chaque course de rotation prédéterminée.

**2.** Système de suivi selon la revendication 1, comprenant :
- au moins un lien souple continu,
- au moins une première poulie (90a, 90b), dite première poulie d'entraînement, agencée l'extérieur d'un côté des châssis (3),
- au moins une deuxième poulie (91a, 91b), dite poulie de renvoi, agencée à l'extérieur du côté des châssis opposé à celui où est agencée la poulie d'entraînement, le lien souple continu étant enroulé autour de la poulie d'entraînement et de la poulie de renvoi,
- un moteur (9) constituant la force d'entraînement, adapté pour mettre en rotation la poulie d'entraînement dans ses deux sens de rotation selon les courses de rotation prédéterminée.

**3.** Système selon revendication 2, comprenant :
- deux poulies d'entraînement (90a, 90b) reliées entre elles par un axe de transmission (10),
- deux poulies de renvoi (91a, 91b) reliées entre elles par un axe de transmission (10),
- deux liens souples d'entraînement continus (7),
chaque châssis comprenant une poulie de châssis (100) à chacune de ses extrémités,
chaque lien souple continu reliant une poulie d'entraînement à une poulie de renvoi et étant fixé aux poulies de châssis d'une extrémité.

**3.** Système de suivi selon la revendication 1, comprenant :
- au moins un lien souple discontinu,
- au moins une première poulie (90a, 90b), dite première poulie d'entraînement, agencée à l'extérieur d'un côté des châssis (3),
- au moins une deuxième poulie (91a, 91b), dite deuxième poulie de d'entraînement, agencée à l'extérieur du côté des châssis opposé à celui où est agencée la poulie d'entraînement, le lien souple discontinu étant fixé à la première et deuxième poulies d'entraînement,
- un premier moteur (9.1) adapté pour mettre en rotation la première poulie d'entraînement (90a, 90b) dans un sens de rotation selon une première course de rotation prédéterminée,
- un deuxième moteur (9.2) adapté pour mettre en rotation la deuxième poulie d'entraînement (91a, 91b) dans un sens de rotation selon une deuxième course de rotation prédéterminée, le sens de rotation de la première poulie d'entraînement étant opposé à celui de la deuxième poulie d'entraînement.

**4.** Système selon revendication 3, comprenant :
- deux premières poulies d'entraînement (90a, 90b) reliées entre elles par un axe de transmission (10),
- deux deuxièmes poulies d'entraînement (91a, 91b) reliées entre elles par un axe de transmission (10),
- deux liens souples d'entraînement discontinus (7),
chaque châssis comprenant une poulie de châssis (100) à chacune de ses extrémités,
chaque lien souple discontinu reliant une première poulie d'entraînement à une deuxième poulie d'entraînement et étant fixé aux poulies de châssis d'une extrémité.

**5.** Système selon l'une des revendications précédentes, au moins une poulie de châssis (100) étant réalisée à l'une des extrémités (30, 31) de chaque châssis (3).

**6.** Système selon l'une des revendications précédentes, deux galets enrouleurs étant agencés individuellement de part et d'autre d'une poulie (100) de châssis.

**7.** Système selon l'une des revendications 2 à 6, le fonctionnement d'un moteur d'entraînement étant asservi par un algorithme de calcul de la position du soleil et de l'angle d'inclinaison des rangées des objets.

**8.** Système selon l'une des revendications 2 à 6, le fonctionnement d'un moteur d'entraînement étant asservi à des capteurs de position adaptés pour calculer la position du soleil et l'angle d'inclinaison des rangées des objets.

**9.** Système selon l'une des revendications précédentes, chaque châssis (3) étant assemblé par modules.

**10.** Système selon l'une des revendications précédentes, le lien souple (7) étant une chaîne ou un câble.

**11.** Système selon l'une des revendications précédentes, la force d'entraînement étant alimentée par des panneaux solaires photovoltaïques.

**12.** Système selon l'une des revendications précédentes, la fixation (8) du lien souple (7) à chaque poulie (100) de châssis se situant à l'endroit où l'angle maximal de rotation dans le sens horaire est égal à celui dans le sens anti-horaire.

**13.** Système selon l'une des revendications précédentes comprenant un récepteur solaire (5) constituant un système solaire à concentration linéaire (1.1), les objets d'une rangée étant des miroirs, chaque rangée de miroirs étant inclinée avec un angle prédéterminé différent d'une rangée à l'autre afin de refléter individuellement le rayonnement solaire sur le récepteur solaire tout au long de chaque course de rotation prédéterminée.

**14.** Système selon l'une des revendications 1 à 12, consistant un système solaire photovoltaïque (1.2), les objets étant des panneaux photovoltaïques, chaque rangée de panneaux photovoltaïques étant inclinée avec un même angle à l'horizontal afin de faire suivre avec l'ensemble des panneaux photovoltaïques le rayonnement solaire tout au long de chaque course de rotation prédéterminée.

**15.** Châssis, destiné à être mis en oeuvre dans le système selon l'une des revendications précédentes, comprenant:
- un axe de rotation (4),
- deux poulies de châssis (100) agencées individuellement autour de l'axe,
- au moins une cloison de renfort conformée en segment circulaire (101) agencé entre les deux poulies de châssis,
- trois tubes de rigidification (102) s'étendant selon l'axe (4) et agencés angulairement à 120° l'un de l'autre, les tubes (102) supportant la(es) cloison(s) de support et les poulies de châssis, les tubes (102) étant en outre adaptés pour supporter individuellement un ou plusieurs objets (20).
